# EUROPEAN PATENT APPLICATION

(11) **EP 2 348 387 A2**
(43) Date of publication of application: **27.07.2011**
(21) Application number: 10016053.0
(22) Date of filing: 23.12.2010
(51) Int. Cl.: G06F 3/041, G06F 3/048

(54) **Multilayer display device**

(30) Priority: 25.12.2009 JP 2009294044; 31.08.2010 JP 2010194652; 31.08.2010 JP 2010194441
(71) Applicant: Sanyo Electric Co., Ltd., Osaka 570-8677 (JP)
(72) Inventor: Shohga, Nobuhiro, Osaka 570-8677 (JP); Kitamori, Yutaka, Osaka 570-8677 (JP)
(74) Representative: Glawe, Delfs, Moll

(57) **Abstract**

A multilayer display device has: a plurality of display screens which are arranged in layers; a touch panel which is arranged frontward of the display screens; and a setting portion which, according to an operation made with respect to the touch panel, sets one of the display screens as an operation screen.

## Description

### BACKGROUND OF THE INVENTION

### 1. Field of the Invention

The present invention relates to a multilayer display device having a plurality of display screens arranged in layers.

### 2. Description of Related Art

Conventionally, MLD (Multi Layer Display) device which has a plurality of display screens arranged in layers has been developed. The MLD device allows a user (or viewer) to view a blended (synthesized) image which is produced by lapping an image of one screen on an image of the other screen.

In such blended image, distance between the viewer and the object in the blended image differs depending on which display screens the object is displayed on. Thus, compared with a conventional single-layer display screen, the MLD device can display a three-dimensional image more realistic.

On the other hand, in recent years, display devices called digital signage displays for displaying advertising information and the like are deployed at public facilities, or outdoors. When the MLD device is used as a digital signage display, it is preferable to employ a touch panel with the display. In JP2008-197634A, a MLD device having the touch panels which allows an inputting operation to a front side display screen is disclosed. With this display device, the user can make the operations such as inputting a geometric figure to the first display layer as well as viewing the image displayed on individual display layers.

However, in these MLD devices, we consider that it is convenient if these devices accept the input operation for every display screens.

### SUMMARY OF THE INVENTION

According one aspect of the present invention, a multilayer display device includes: a plurality of display screens which are arranged in layers; a touch panel which is arranged frontward of the display screens; and a setting portion which, according to an operation on the touch panel, sets one of the display screens as an operating screen.

### BRIEF DESCRIPTION OF THE DRAWINGS

Fig. 1 is a block diagram of an MLD device 1;
Fig. 2 is a sectional view of the MLD device 1;
Fig. 3 is a diagram illustrating different properties related to operation modes in MLD device 1;
Fig. 4 is a flow chart showing the operation of the MLD device 1 (steps S1 through S9);
Fig. 5 is a flow chart showing the operation of the MLD device 1 (steps S11 through S19);
Fig. 6 is a flow chart showing the operation of the MLD device 1 (steps S21 through S29);
Fig. 7 is a diagram illustrating original image information;
Fig. 8 is a diagram illustrating corrected image information;
Fig. 9 is a diagram illustrating a blended image;
Fig. 10 is a block diagram of an MLD device 100 of the invention;
Fig. 11 is a sectional view of the MLD device 100;
Fig.12 is a diagram illustrating a format of image data;
Fig. 13 is a flow chart showing operation for switching the operating screen in MLD device 100;
Fig. 14 is a diagram showing the states of display on individual display screens of MLD device 100;
Fig. 15 is a diagram showing the states of display on individual display screens of MLD device 100;
Fig. 16 is a diagram showing the states of display on individual display screens of MLD device 100;
Fig. 17 is a diagram showing the states of display on individual display screens of MLD device 100;
Fig. 18 is a diagram showing the states of display on individual display screens of MLD device 100;
Fig. 19 is a flow chart showing operation for switching the operating screen of the MLD device 100;
   and
Fig. 20 is a diagram illustrating different properties related to operation modes in MLD device 100.

### DETAILED DESCRIPTION OF PREFERRED EMBODIMENTS

The present invention is described referring to the first and the second embodiment below. Both embodiments regards to a multilayer display device (MLD device) having a touch panel.

### 1. First embodiment

### (Configuration of the MLD Device 1)

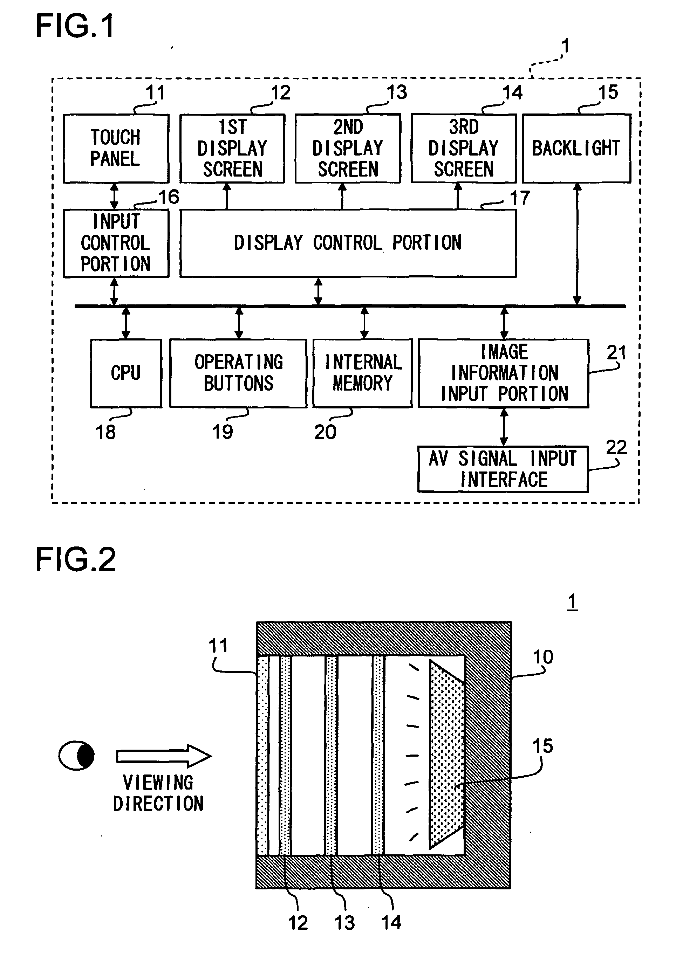

Fig. 1 is a block diagram showing a configuration of an MLD device according to the present embodiment. As shown in the figure, the MLD device 1 has a touch panel 11, a first display screen 12, a second display screen 13, a third display screen 14, a backlight 15, an input control portion 16, a display control portion 17, a CPU (central processing unit) 18, operating buttons 19, an internal memory 20, an image information input portion 21, an AV signal input interface 22, etc.

Fig. 2 is a sectional view of the MLD device 1 when the device is cut on a plane parallel to the viewing direction of a user. As shown in the figure, the MLD device 1 has a housing 10 having an opening at the front side (the "front side" denotes the side closer to the user). Inside the housing 10, the touch panel 11, the first display screen 12, the second display screen 13, the third display screen 14, and the backlight 15 are arranged in this order from the front side to the rear side. Thus, the display screens 12, 13 and 14 are arranged in layers.

Touch panel 11 is a panel having substantially the same size as the surfaces of these display screens. When the panel 11 is touched by a finger of the user, the touch panel 11 generates a signal indicating the touching position of the finger. This signal is transmitted to the CPU 18 via the input control portion 16.

Touch panel 11 is formed of a transparent material. Thus, the user can see the images displayed on the display screens 12, 13 and 14 through the panel 11.

Display screens 12, 13, and 14 are liquid crystal displays having the same sized surfaces, and each having RGB (red, green, and blue) pixels arrayed across the surface. The light transmittance of each of the display screens are adjusted by the display control portion 17 for each of the pixels.

Backlight 15 functions as a light source in the MLD device 1, and is made by, for example, fluorescent lamps or LEDs (light-emitting diodes).

Input control portion 16 recognizes the touching position on the touch panel 11 based on the signal from the panel 11. The recognition result is transmitted to the CPU 18.

Display control portion 17 adjusts the light transmittance of the display screen 12,13 and 14 for each pixel thereof, based on image information (or image data) transmitted from the internal memory 20, or the image information input portion 21, etc., so that an image is formed on these display screens. The format of the image information used in the MLD device 1 is discussed later.

The CPU 18 performs an overall control of the MLD device 1.

Operating buttons 19 is a button operated by the user.

Internal memory 20 stores image information, or preference information related to operations (which is discussed in detail later), etc. The image information input portion 21 receives image information from the external device or network via the AV signal input interface 22. This interface 22 may be a receiver which receives signals from a wired network (Ethernet etc.), or a wireless receiver which receives signals from wireless network (wireless LAN, wireless WiMax etc); The interface 22 may also be a USB terminal connected with a PC (personal computer) or the like. The inputted image information is stored in the internal memory 20 temporarily. Thereby, the MLD device 1 can display various kinds of information, or can install application softwares.

### (Operation of the MLD device 1)

Now, the operation achieved in the MLD device 1 is described.

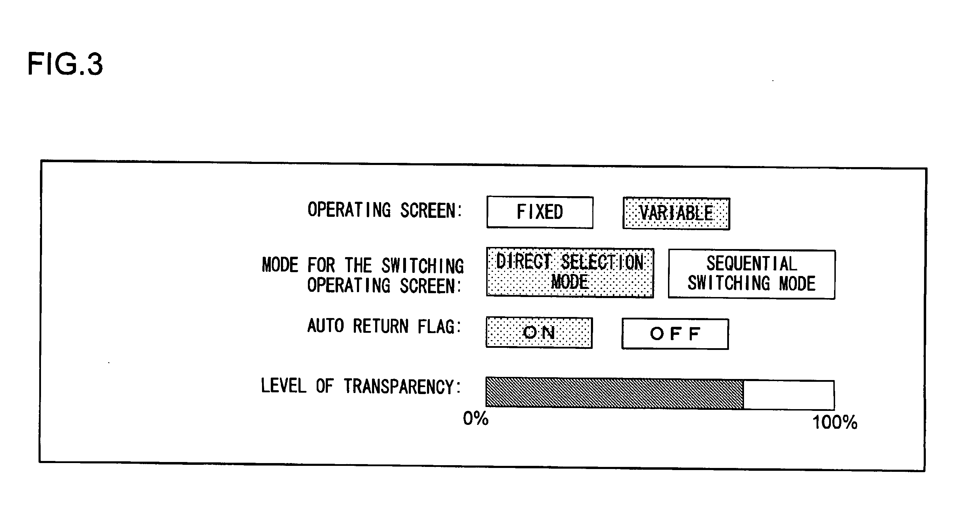

The MLD device 1 accepts preference information set by the user regarding to operation modes. For example, when one of the operating buttons 19 is pushed, an image including icons as shown in Fig. 3 is displayed on the display screen 12. The user can then set a preference for each setting by touching the icons displayed on the screen 12. The detail of each of these settings is described below.

The property "Operating Screen" has "Fixed" mode and "Variable" mode. When "Fixed" is selected, the operation is valid only for the first display screen 12, and invalid for the other screens 13 and 14.

When "Variable" is selected the user can operate all of the display screens via the touch panel 11.

The property "Mode for the Operating Screen" is valid when the user selected "variable" in the "Operating Screen". The user can select either "Direct Selection Mode" or "Sequential Switching Mode". In the former mode, the user can select the operating screen directly. In the latter mode user can select the operating screen by making a predetermined operation.

The property "Auto Return Flag" has "On" and "Off' mode. When this property is set to "ON," the operating screen go back to the screen 12 (front side screen) when there is no touch operation to the touch panel 11 for a predetermined period. When this property is set to "OFF", the operating screen is maintained to the same screen unless there is no specific direction from the user.

The property "Level of Transparency" relates to transmittance of the display screens. This is for to adjust the transparency of the frontward display screen so that the operation to the rear side screen by the user is facilitated.

This property can be set to any value from 0% (no transparency) to 100% (completely transparent). When the MLD device 1 is used as a digital signage display, a screen as shown in Fig. 3 may be displayed so that the administrator of the facility, where the MLD device is deployed, can adjust the setting of the device 1. This setting screen may be viewable only to these administrators and may not be viewable by general users.

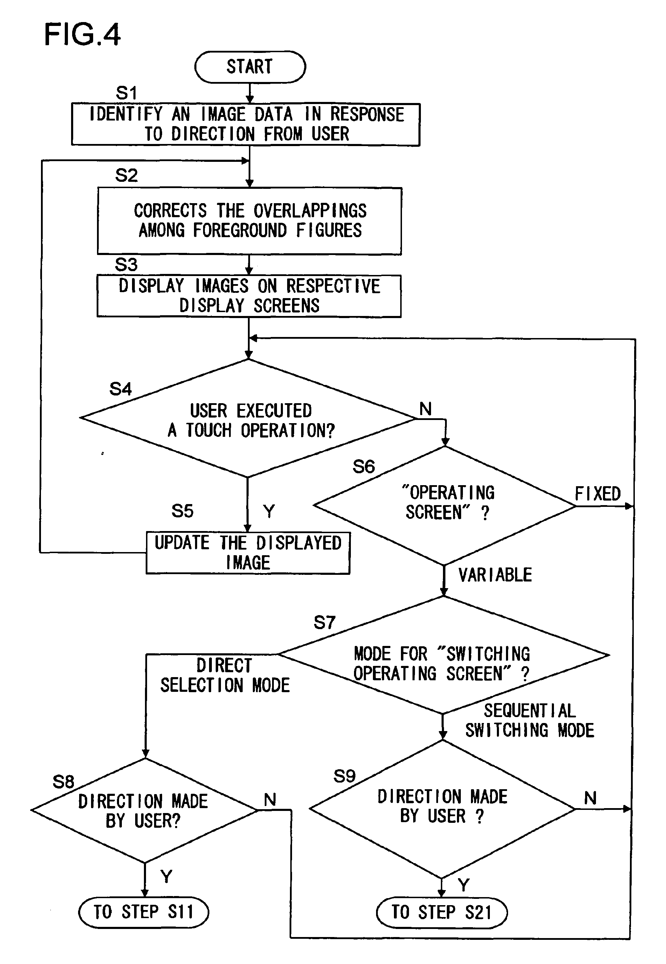

Next, the operation in the MLD device 1 is described, referring to the flow chart of Figs. 4, 5, and 6.

First, in response to a direction from the user, the CPU 18 identifies the image information which should be displayed on the display screens (step S1). This image information may be the one stored in the internal memory 20 or the one downloaded from the internet via the interface 22.

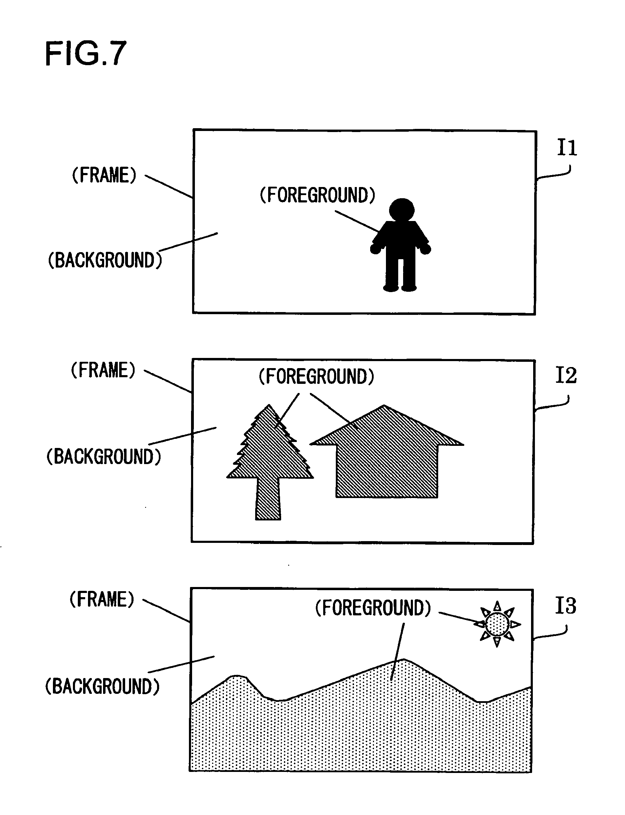

Fig. 7 shows an example of the images displayed in each of the display screens 12, 13, and 14. The image I1 is the image displayed in the screen 12 (the front side screen), the image I2 is the image displayed in the screen 13, and the image I3 is the image displayed in the screen 14 (the rear side screen). The image I1 is constituted by a foreground which is an image of a human and the background. The image I2 is constituted by a foreground which is a tree and a house. The image I3 is constituted by a foreground which is a mountain. When these images are displayed on the respective screens, the viewer can see a blended image of these images.

However, if such images I2 and I3 are layered, the user may feel discomfort since their foregrounds (tree, house and the mountains) overlap, and view unnatural mixed colors. To avoid this, the CPU 18 corrects the images I2 and I3 so as to eliminate such overlapping (step S2).

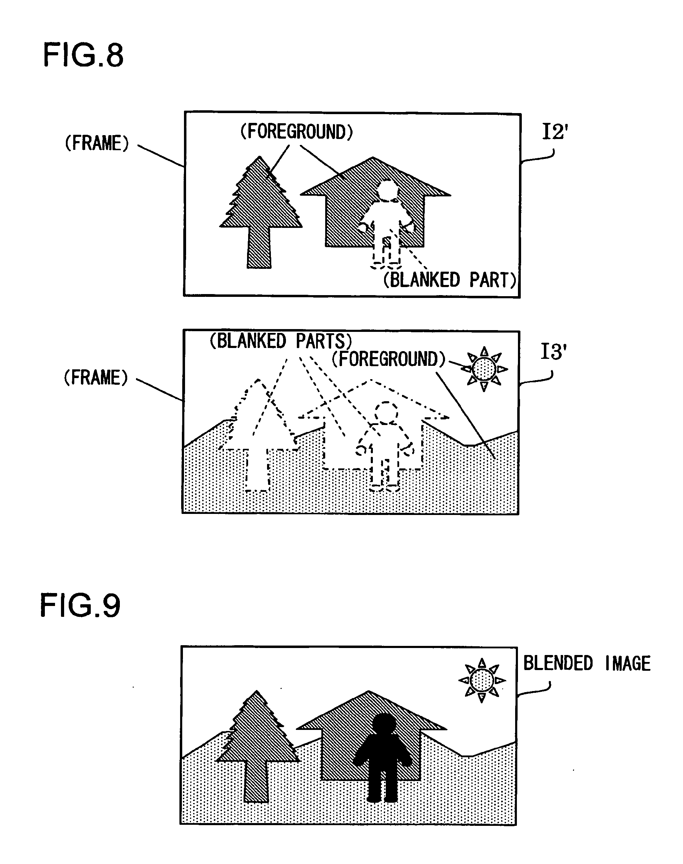

Specifically, the CPU 18 corrects the images I2 and I3 to images I2' and I3' respectively as shown in Fig.8. For I2', the region that overlaps the foreground (human) of the front side image I1 is corrected to a blank image. For I3', the region that overlaps the foreground of the I1 (human) and the foreground of the I2 (tree and house) are corrected to blank images.

Thereafter, the CPU 18 gives the display control portion 17 so that the image I1 is displayed on the screen 12, the corrected image I2' is displayed on the screen 13 and the corrected image I3' is displayed on the screen 14 (step S3).

As a result, a blended image as shown in Fig. 9 is viewable by the user. At this point, it is presumed that the screen 12 is set as the operating screen which accepts the touch operation by the user.

As discussed in detail later, the MLD device 1 may allow the touch operation to the screens 13 and 14 as well as screen 12. However, it is expected that the screen 12which is located most frontward is operated most frequently. Accordingly, the device 1 is designed so that the operating screen is set to the screen 12 in the default setting.

After the step S3, the CPU 18 determines whether the user has executed a touch operation or not (step S4). The touch operation may correspond to drawing a line if the display is utilized as illustration software, or may correspond to pushing an icon shown on the display in order to acquire new information. When such operation is given ("Y" step S4), CPU 18 updates the image I1 to be displayed in screen 12 (step S5). Then the procedure goes back to step S2, and the correction of the image I2 and I3 is achieved similarly as described above.

When determined "No" in step S4, it proceeds to step S6. When the "Operating Screen" (see Fig. 3) mode is set to "Fixed" it goes back to step S4. When set to "Variable" it proceeds to step S7 and the CPU 18 investigates the setting of "Mode for the Operating Screen" (see Fig. 3).

When it is set to "Direct Selection Mode", it proceeds to step S8, and the CPU 18 investigates whether any of the screens 12, 13, or 14 is directly selected by the user.

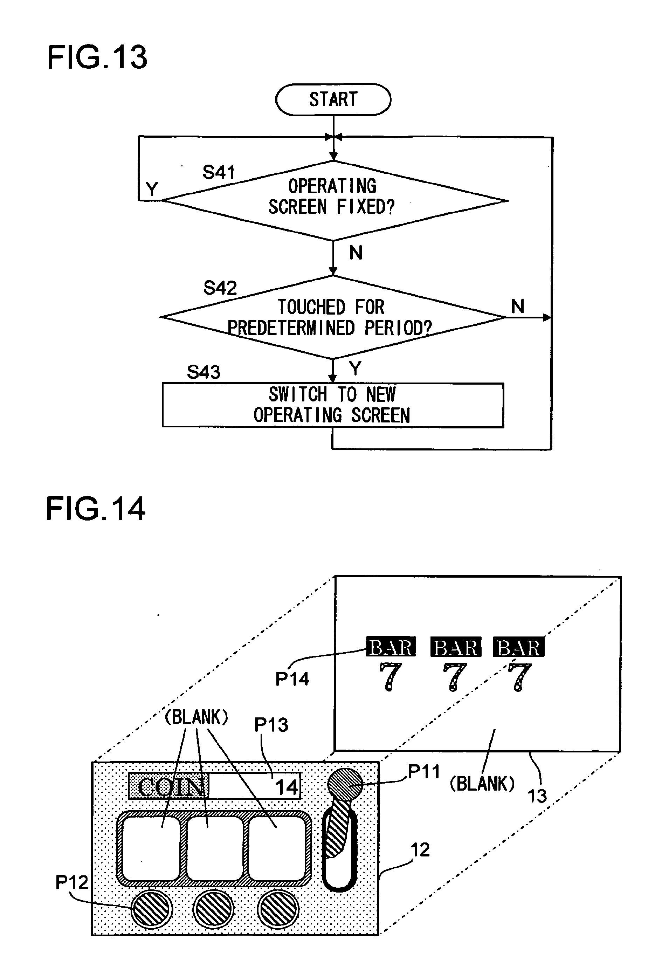

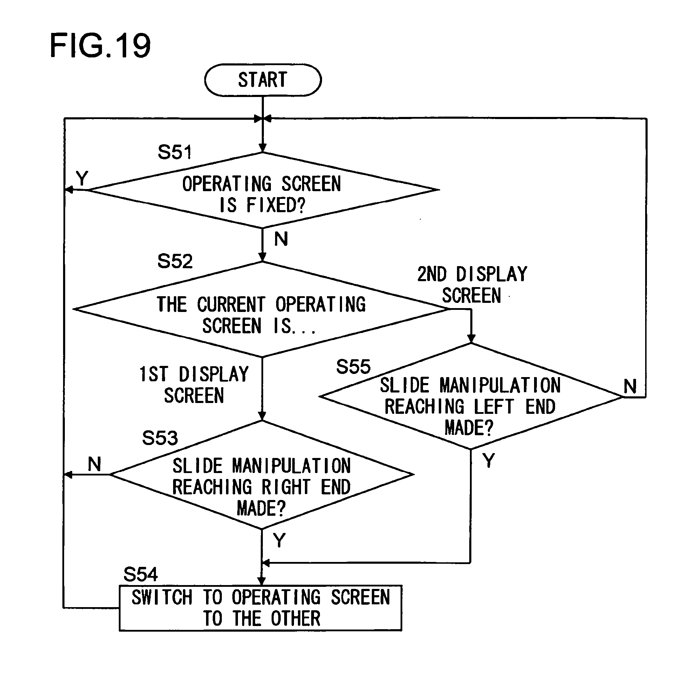

When it is set to "Sequential Switching Mode", it proceeds to step S9. In the S9, CPU 18 determines whether the user directed to switch the operating screen or not. The examples of above direction is: (1) a continuous touch on the same position of the touch panel 11 (for example 3 seconds), the position maybe any place, or a predetermined place (for detail, see Fig. 13); or (2) a dragging (or sliding) operation (moving a finger on the touch panel 11) from central portion of the panel 11 to the edge portion of the display device 1 (for detail, see Fig. 19).

When it is determined that the user did not direct to switch the screen ("N" at step S9), then it goes back to step S4.

### (When determined "Yes" in S8)

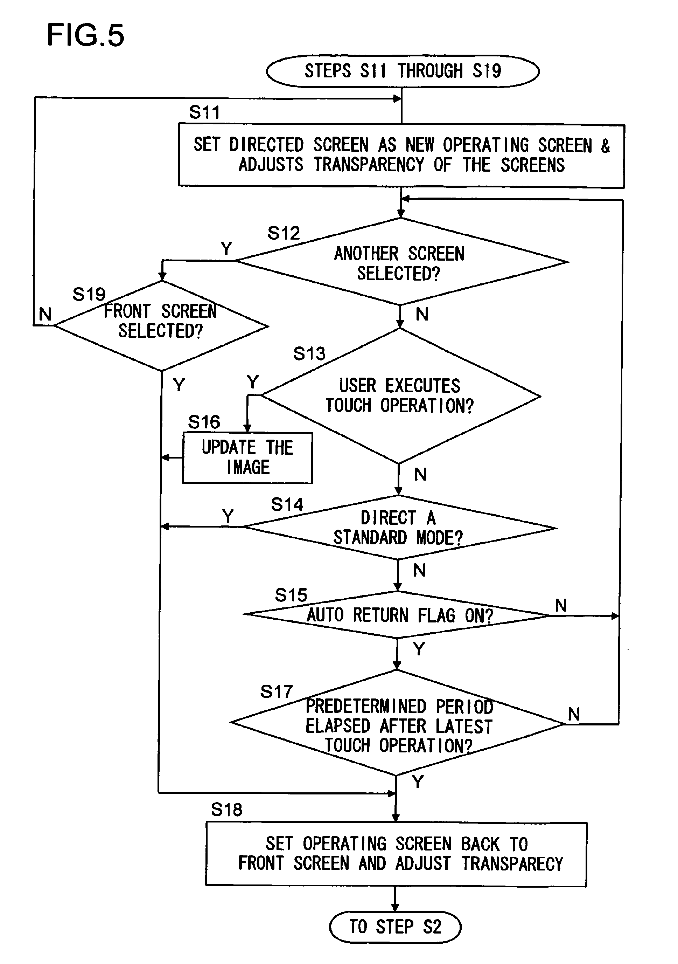

Fig.5 shows a flowchart showing the procedures when it is determined "yes" in the step S8. In this case, the CPU 18 sets the selected display screen as a new operating screen when the user directly selected any of the screens 12, 13, or 14.. Then, the CPU 18 adjusts the transmittance of the display screens so that it conforms to the new operating screen (step S11).

For example, when the second display screen 13 is set as a new operating screen, the screen 12 located frontward is converted more transparent, while the transparency of the screen 14 located rearward is remained same.

After S11, the CPU 18 determines whether one of the other display screens is selected as a new operating screen (step S12). If determined "no" in S12, it proceeds to step S13 and determines whether the user has operated the operating screen. If determined "no" in S 13, it proceeds to step S 14 and determines whether the user directed the standard mode. When it is determined "no" in step S14, then it proceeds to step S15 and determines whether the "Auto Return Flag" (see Fig.3) is set to "ON".

When it is determined "yes" in step S12, it proceeds to step S19. When the user selected the first screen 12 ("Y" at step S 19), it proceeds to step S 18 and the CPU 18 switches the operating screen back to the screen 12, and adjust the transparency of the screens, specifically lowering the transparency of the screen 12.

When user selected a screen other than the screen 12 ("N" at step S 19), it returns back to S 11. Thus, the operating screen is switched.

When it is determined "Y" in S 13, it proceeds to step S16. In S16, the CPU 18 updates the image of the operating screen according to the touch operation made by the user. Then, it proceeds to S 18. When it is determined "yes" in S 14, it proceeds to S 18 as well.

When it is determined "Y" at step S 15, it proceeds to step S 17. In S 17, the CPU 18 determines whether a predetermined period of time has elapsed after the latest touching operation. When determined "yes", it proceeds to S18. When determined "no", it goes back to step S12.

### (When determined "Yes" in S9)

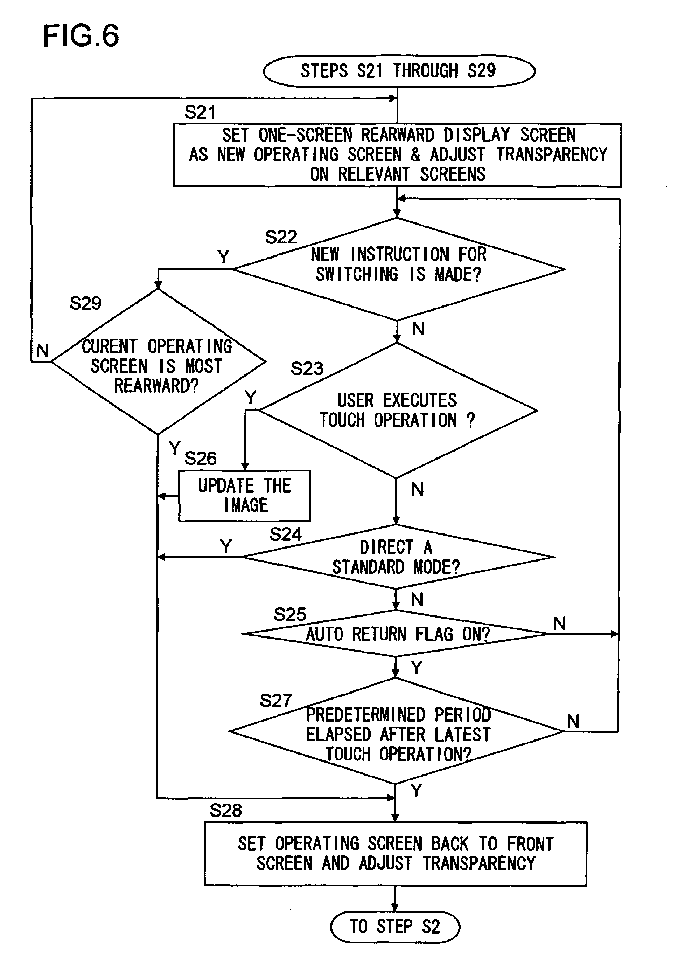

Fig.6 shows a flowchart showing the procedures when it is determined "yes" in the step S9. In this case, the CPU 18 sets new operating screen to a screen located one screen rearward of the current operating screen when the user directs to switch the operating screen by making a predetermined touch operation(step S21).

In step S21, the CPU 18 increases the transparency of the screen located frontward of the operating screen so that the user can view a new operating screen clearly.

After step S21, it proceeds to S22, S23, S24, S25, S26, S27, S28 and S29 as shown in Fig.6. However, since the process executed in the S22, S23, S24, S25, S27, and S28 are the same as S12, S13, S14, S15, S17, and S18 as shown in Fig. 5 respectively, the detailed explanation is omitted here.

When the current operating screen is the display screen 14 which is located most rearward ("Y" at step S29), the CPU 18 sets the operating screen back to the first screen 12, and cancels the transparency adjustment of the first and second screens 12 and 13. When current operating screen is not the most rearward screen ("N" at step S29), it goes back to step S21.

According to the procedure shown in Fig.6, the operating screen is switched to a rearward screen. However, the operating screen may be switched to the frontward screen as well. In this case, the transparency should be lowered for the new operating screen so that the user can view the operating screen clearly.

According to the MLD device 1 described above it can offer following advantages.

First, the user can operate any of the display screens (12 to 14), thus it gives an advantage compared to the conventional MLD device which offers the operation to the front side screen only.

Second, the device 1 allows the user to switch the mode of "Operating Screen" between "fixed" and "variable". Thus, when an administrator of this device 1 does not want the user to operate the screens other than the front side screen, this problem can be prevented by setting the mode to the "fixed" mode.

Third, this MLD device adjusts the transmittance of the screen located frontward of the operating screen. Thus, the user can easily view the operating screen and makes it easy to operate the screen.

Fourth, the MLD device 1 can adjust the "Level of transparency" (see Fig. 3). Sometimes the user wants to operate a certain screen, while viewing the other screen. For example, when the user wants to operate the second screen 13 while viewing the first screen 12, it may not be convenient if the transparency of the screen 12 is too high. Thus, by using the "Level of transparency" feature, the user can adjust the transparency of the first screen 12 so that the user can view both screens 12 and 13.

Fifth, the user can select "Mode for the Operating Screen" between "Direct Selection," and the "Sequential Switching Mode". Thus, the user can set the mode according to his or her preference.

Sixth, the MLD device 1 offers the "Auto Return Flag" Mode (see Fig.3). Thus the operating screen can be set back to the first screen 12 when no touch operation is made for a predetermined period, which makes more convenient to the user.

### (The other example)

The MLD device 1 may be configured so that the user can select an operation screen with a simple operation.

When the user's finger is pointing the same position of the touch panel 11 for a first predetermined period (for example 3 seconds), the operating screen switches to a screen one screen rearward.

When the user's finger is pointing the same position of the touch panel 11 for a second predetermined period (for example 5 seconds) the operating screen switches to a screen two screens rearward.

This allows the user to switch the operation screen easily. These predetermined times should be set at adequate values so that the operation screen is not switched erroneously.

This idea may be applied to the MLD devices provided with four or more display screens as well.

In this embodiment, when the transparency is adjusted by a user's preference (see Fig.3), the entire display area is subjected to this adjustment. Instead, a part of the display area may be subjected to the adjustment only. Moreover, transparency-adjusted screen does not have to be kept in same state all the time. For example, the front screen may be kept transparent only when a touch operation in the rearward screen is being made.

Although in this embodiment the operating screen is fixed to the first display screen 12 as described above, the fixed screen may be freely selectable by the user.

### 2. Second embodiment

### (Configuration of MLD Device):

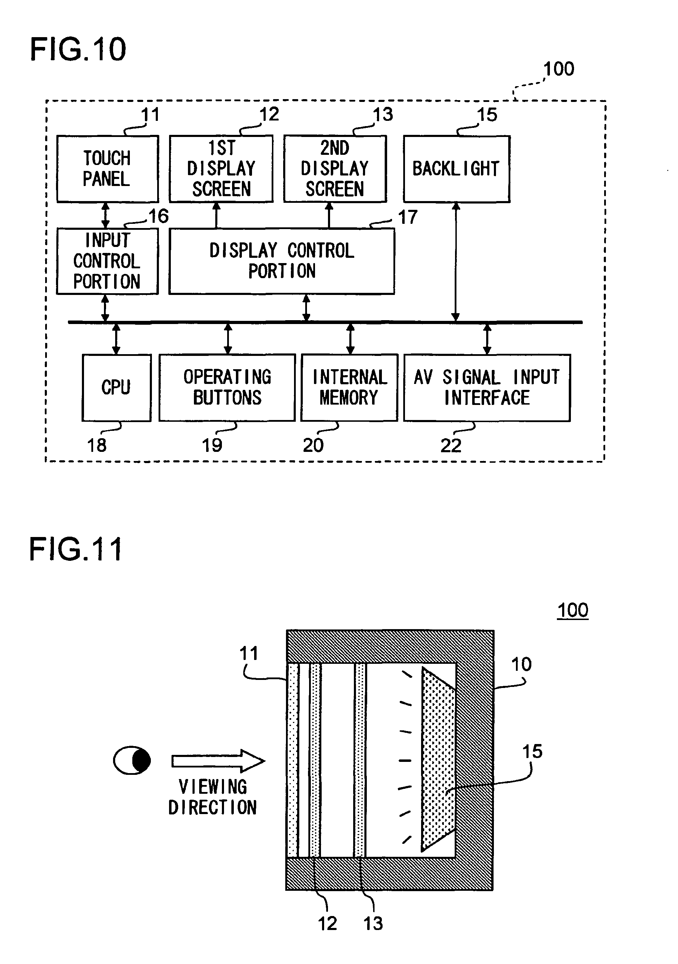

Fig. 10 is a block diagram showing the configuration of the MLD device. As shown in the figure, the MLD device 100 includes a touch panel 11, a first display screen 12 (front display screen), a second display screen 13 (rear display screen), a backlight 15, an input control portion 16, a display control portion 17, a CPU 18, operating buttons 19, an internal memory 20, an AV signal input interface 22, etc. This MLD device 100 is provided with two layers of display screens, while the MLD device 1 of the first embodiment is provided with three layers. The following discussion is focused on configuration or features different from the previous embodiment, and common configuration etc, is not described in detail.

Fig. 11 is a sectional view of the MLD device 100 when the device is cut on a plane parallel to the viewing direction of a user. The MLD 100 is different from the MLD device 1 (see Fig.2) in a sense that the third display screen 14 is omitted in the device 1.

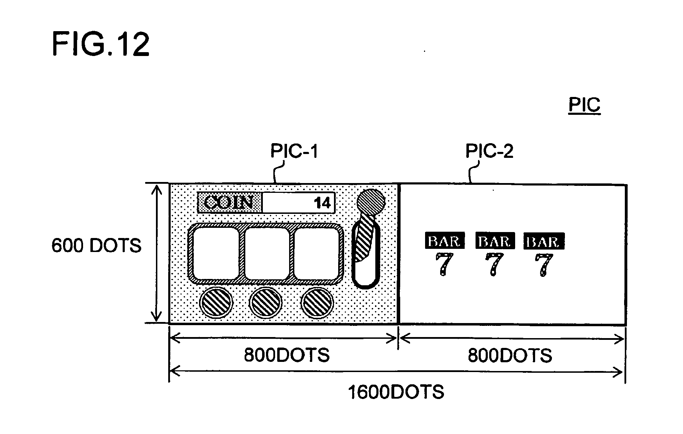

Referring to Fig. 12, the format of image data used in MLD device 100 is described. As shown in the figure, the image data PIC has a format having PIC-1 arranged at left side and PIC-2 arranged at right side. Basically, the PIC-1 is the data which is displayed in the first screen 12 and PIC 2 is displayed in the second screen 13. Thus this image data PIC has a size that matches the size of these display screens. For example, the size of PIC is set to 1600 dots in horizontal direction and 600 dots in vertical direction, since each of the display screens have size of 800 dots wide and 600 dots high.

This image data PIC is distributed from the interface 22. Then, the display control portion 17 separates the PIC into the left half portion (PIC1) and right half portion (PIC2). PIC1 and PIC are utilized for displaying respective images a on the display screens 12 and 13. This PIC, in which the PIC1 and PIC2 is combined as a single image data, has an advantage because it is easier to synchronize the images between the one displayed on the screen 12 and the other displayed in the screen 13, compared to inputting separate data (PIC1 and PIC2) to the MLD device 100 from the interface 22.

### (Operation of the MLD device 100):

Here, the operation specific to this MLD device 100 is described. The operation common with the device 1 of the previous embodiment is not described in detail.

In the device 100, mode for setting the operating screen can be selected among "variable," "fixed to the front screen," and "fixed to the rear screen." The user may select one using the operating buttons 19,or operation from the touch panel 11. Such settings can be achieved by an administrator of this device 100 and may be configured so that the general user cannot select these modes freely.

Same as the MLD device 1, the "variable" setting mode is the mode which allows a switching of the operating screen when particular touching operation is made by the user. In the "fixed to the front screen" setting mode, the operating screen is fixed to screen 12, which is same as the "Fixed" mode in the device 1, and does not accept the switching of the operating screen. The "fixed to the rear screen" mode is new feature compared with MLD device 100. This is the mode in which the operating screen is fixed to the screen 13 (rear side screen).

Although, it is mentioned above that these three modes can be selected only by the administrator, it may be selected by general user as well. In such case, it is preferable if these settings are selected using the operating buttons 19 provided separately from the touch panel 11, so that an inadvertent touch operation by the general user can be avoided.

Next, switching operation of the operating screen is described with reference to a flow chart shown in Fig. 13. In step S41, it is determined whether the operating screen is fixed or not. If not fixed (that is, the mode is "variable", and "N" at step S41), it proceeds to step S42. In step S42, the CPU 18 determines whether the user's finger is touched on the same position of the touch panel 11 for a predetermined time (for example, 3 seconds) without moving across the finger on the panel 11. If the finger moves off the panel 11 or moves across the panel 11 within the predetermined time, the CPU 18 determines that the finger is not touched on the same position (i.e. "N" at step S42).

When it is determined "Y" at step S42, the CPU 18 switches the operating screen to other display screen (step S43). For example, if the current operating screen is screen 12, then it is switched to the screen 13. If the current one is screen 13, then it is switched to the screen 12.

When determined "N" at step S42, or when determined "Y" at step S41 (mode is in "Fixed" mode), it returns to step S41.

In the above, the predetermined time should be long enough compared with an ordinary touch operation so that the operating screen is not switched against the user's intention.

Further, it may be configured so that, when the current operating screen is set to the front screen 12 and the user wants to operate an object shown in the rear screen 13, the user can operate this object by touching the touch panel 11 for predetermined time in a position above this object. By this, it can ease the user's operation.

As described above, the PIC1 for the front screen 12 and the PIC2 for rear screen 13 are the left side portion and right side portion of the PIC respectively. Thus, the above-mentioned switching operation corresponds to switching the position for 800 dots sideways which is half the image data size in horizontal direction.

### (Applications) (Slot-machine)

First, the MLD device 100 used as slot machine (like those deployed at pachinko parlors in Japan) is discussed.

According to a software application installed in the device 100, the device 100 first displays images as shown in Fig. 14 on the respective screens 12 and 13 as an initial status. Specifically, on the screen 12, the images of a slot machine lever P11, three stop buttons P12, and an indication of the number of coins P13 are displayed. Further, in the image displayed on the screen 12, there are three blank portions which make an object displayed in the rearward screen viewable.

On the second display screen 13, symbols P14 (pictorial patterns of letter "bar" and number "7") are displayed, with the other part left blank. Each of the symbols P14 is located so as to overlap the bank portion of the image displayed in the screen 12. The three stop buttons P12 are displayed so that each of them corresponds to respective symbols P14.

When the lever P11 is operated by the user (by touching operation of the touch panel 11), the number of coins P13 is shown decreased by a predetermined number, and the state of display of the symbols P14 is continuously changed so as to look like revolving reels in a slot machine. When one of the stop button P12 is specified by the user (by touch operation), the corresponding symbol P14 (which is shown above the P12 touched by the user) is shown fixed to the image when the stop button P12 is touched. When the user specifies all of the three buttons P12 and the display states of all three symbols 14 are fixed, the number of coins shown as P13 is decreased or increased according to the result of symbols 14. Thereby, the user can use the MLD device 100 as an emulated slot machine. Further, since this emulated slot machine is constituted with two display screens 12 and 13, the user can see the image stereoscopically.

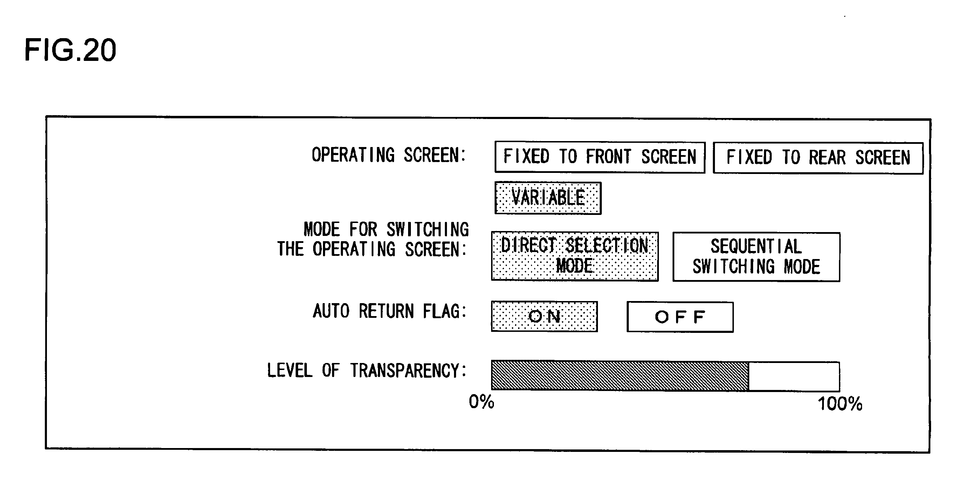

When this slot-machine application is used, the touch operations made by the user are basically limited to those regarding to the lever P11 and the buttons P12, and no touch operations with respect to the second display screen 13 are expected to be made. Accordingly, when the MLD device 100 is used mainly for this application, the setting regarding to the operating screen should be set to "Fixed to the Front Screen" mode (see Fig.20). This helps prevent the operating screen from being switched to the second display screen 13 against the user's intention.

### (Car-navigation)

Next, a description is given for a case when the MLD device 100 is used as a display device for a car navigation system.

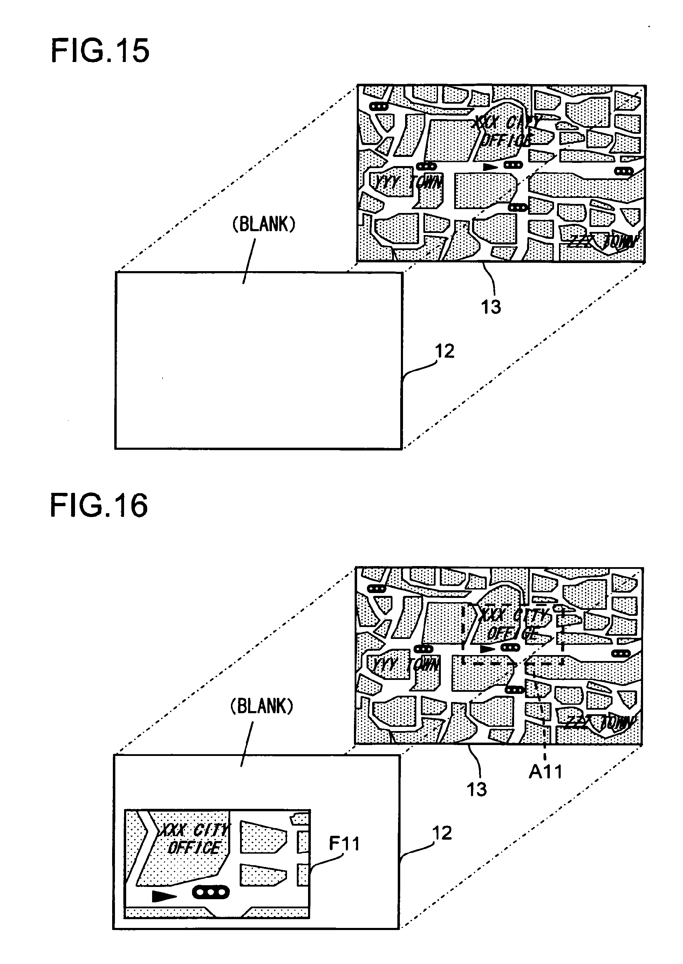

When the device 100 is operating according to this car navigation application, an image as shown in Fig.15 is displayed on the second display screen 13 as an initial state. This image is a map centering on the current location of a vehicle driving the roadways or a person walking down the street. Information such as maps etc. may be previously stored in the device 100, or may be downloaded from the network. The current location information is obtained using GPS (global positioning system). On the other hand, the entire first display screen 12 is left blank or transparent in the initial state, so that the map shown in the screen 13 is viewable.

When a user points a specific location on the map shown in the screen 13, the CPU 18 identifies the area to be shown enlarged (see Fig. 16, A11), centered on the pointed location, and an then this enlarged map of the pointed location is displayed on the first display (front side) screen 12 (see Fig. 16, F11).

In order to make the enlarged view (F11) easier to see, the region on the screen 13 overlapping the frame F11 may be displayed in fainter or blank. Instead, the enlarged view may be displayed over the entire screen 12 as well.

After the enlarged view is displayed on the screen 12, the image in the screen 12 is turned entirely blank when a predetermined period of time has elapsed, and returns to the initial status (as shown in Fig. 15). Since this MLD device 100 displays a regular map on the rear side screen, and displays an enlarged map on the front screen, it can achieve a stereoscopic image display.

When this car-navigation application is used, the touch operations by the user are basically limited to a pointing operation on a map shown in the second screen 13, and operations with respect to the screen 12 are not expected to be made. Accordingly, in this case, the setting regarding to the operation screen is preferably set to "Fixed to the Rear Screen" (see Fig.20). This helps prevent the operating screen from being switched to the first display screen 12 against the user's intention.

However, in such case, the device 100 may be also configured that it accepts a touch operation to the first screen 12 as well. For example, when the user points (or touches) a specific location shown in the enlarged map, the map is updated to one centered on the pointed location.

In such case, the operating screen mode may be set to "variable" (see Fig.20) so that the user can switch an operating screen and can make a touch operation to both the second and the first screens.

In such case, the touch operation on the screen 12 may be limited to the portion where the frame F11 is displayed only. In other word, even when the operating screen is set fixed to a single screen, it may accept an operation to the other screen under certain limitation. This can be realized, for example, by modifying a portion of the basic software of the application.

### (Guide Board)

Next, a description is given for a case when the MLD device 100 is used as a facility guide board which provides facility information to visitors. Since many of the processing executed in the device 100 is common with the case of the car-navigation, some of the description is omitted hereafter.

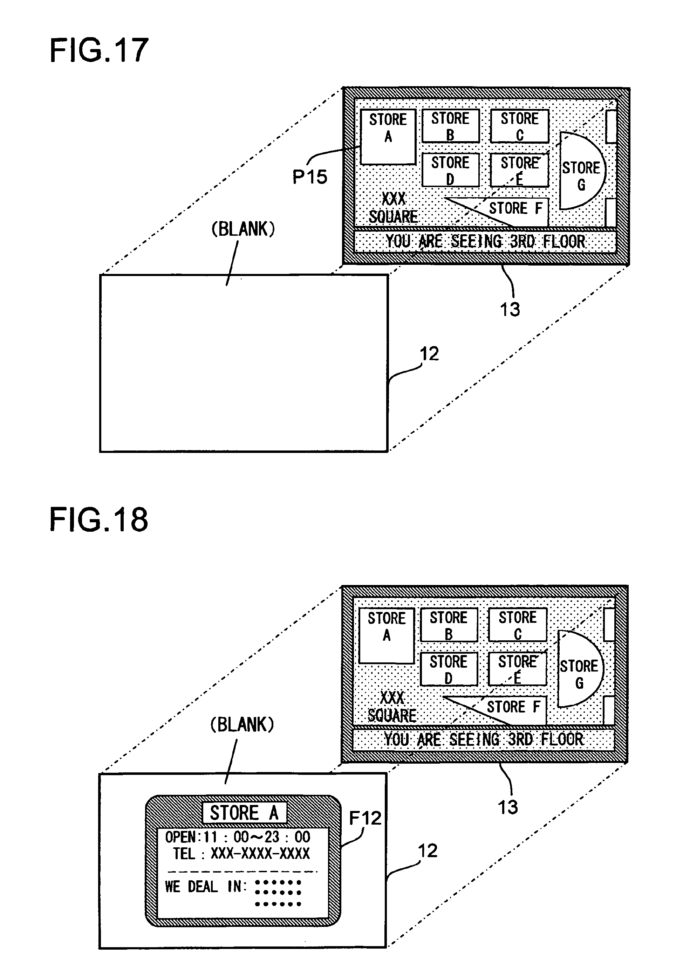

In this case, an image as shown in Fig.17 is displayed on the second display screen 13 as an initial state. This image is a map indicating the locations of stores (stores A to G) in a shopping center.

This guideboard application also contains detailed information of the individual stores. The detailed information of the stores is associated with the locations on the map at which the respective stores are shown. When a user points a specific store (store A) on the map, the detailed information (F12) of the store is displayed on the screen 12 as shown in Fig. 18.

Thereby, a guideboard using a stereoscopic image display is realized.

In such case, setting regarding to the operating screen is preferably set fixed to the rear screen as well as in the car-navigation application.

However, in such case, the device 100 may also be configured that it accepts a touch operation to the first screen 12 as well. For example, when the volume of the detailed information of the store is large that it cannot display all information in a single page (single display) and needs several pages (or several display screens), the user may make a touch operation to the first screen 12 (within the frame F12). As a result, the display of the detailed information moves to the next page.

### (The other example for a switching the operating screen)

Instead of the "hold-down" touch operation as described in Fig. 13, the user can use the other operation to switch the operating screen. The user can switch the layer using so-called "slide" touch operation.

Referring to Fig. 19, the CPU 18 determines whether the operation screen is fixed or not. If it is not fixed ("N" at step S51), it proceeds to S52. If it is determined that the current operation screen is the screen 12 it proceeds to S53, and the CPU 18 determines whether the slide operation reaches the right end of the touch panel 11.

When it is determined "yes" in step S53, the CPU 18 switches the operating screen to the second screen 13 in the step S54. That is, a slide operation (touch operation) from the central part to right end part of the touch panel 11 is recognized as a switching direction from the user.

On the other hand, when it is determined in S52 that the current operating screen is the second screen 13, it proceeds to step S55 and the CPU 18 determines whether the slide operation toward the left end of the touch panel 11 has been made.

When determined "yes" at step S55, the CPU 18 switches the operating screen to the first screen 12 in step S54.

Through the above processing, a slide operation toward the right makes the operation screen switch to the rearward screen; while the slide toward left makes it switch to the frontward screen 12. This concept may be applied for MLD devices containing three or more screens as well.

The MLD device 100 may be so configured that, whenever the slide operation toward the edge part of the touch panel 11 is made, it may switch the operating screen if the number of the display screens is limited to two. That is, any of the slide operation toward right, left, upward or downward may be regarded as an instruction from the user for switching the layer (operating screen).

It should be understood that the embodiments of the present invention described specifically above are in no way meant to limit the invention. For example, Embodiment 2 deals with a case where the MLD device 100 uses image data in a format as shown in Fig. 12, this is not meant as a limitation; image data in any other format may be used. The present invention may be implemented with many modifications and variations made without departing from the spirit of the invention.

## Claims

1. A multilayer display device comprising:
a plurality of display screens which are arranged in layers;
a touch panel which is arranged frontward of the display screens; and
a setting portion which, according to an operation on the touch panel, sets one of the display screens as a operating screen.

2. The multilayer display device of claim 1, wherein
when the operation on the touch panel is made for a predetermined duration continuously, the setting portion changes the operating screen.

3. The multilayer display device of claim 1, wherein
when the operation on the touch panel is made for a predetermined duration continuously at a same position on the touch panel, the setting portion changes the operating screen.

4. The multilayer display device of any of claims 1 to 3, further comprising:
an input portion which receives input of synthesized image data including an image data for the first screen and an image data for the second display screen, wherein the first and second display screens being comprised in the display screens; and
a display control portion which controls display on the display screens according to processing by the setting portion.

5. The multilayer display device of claim 4, wherein
when the operation on the touch panel is made for a predetermined duration continuously, the setting portion recognizes that the operation position on the synthesized image data is changed by a distance corresponding to half a size of the synthesized image data.

6. The multilayer display device of any of claims 1, 4 or 5, wherein
when the operation with on the touch panel involves movement from a central part to an edge part of the touch panel, the setting portion switches the operation screen.

7. A multilayer display device, comprising:
a first display screen which displays information;
a second display screen which displays information and arranged rearward of the first display screen;
a touch panel which is arranged frontward of the first display screen;
a first setting portion which sets the switching of a operating screen valid or invalid, wherein the operating screen is a screen in which the input through the touch panel is accepted;
a second setting portion which, when it is set valid in the first setting portion , sets one of the first and second display screens as an operating screen according to the operation on the touch panel; and
a third setting portion which, when it is set invalid in the first setting portion, sets a predetermined one of the display screens as the operation screen irrespective of the operation on the touch panel.

8. The multilayer display device of claim 7, wherein
the device displays an enlarged view of a map or information related to a map on the first screen,
when the map is displayed on the second display screen which is set as the operating screen by the third setting portion, and
when an input operation is recognized by the touch panel.

9. The multilayer display device of claim 8, wherein
the input operation from the touch panel is accepted only to the area where the enlarged view or the related information is displayed.

10. The multilayer display device of claim 7, wherein
the device is utilized as an ATM terminal or a slot machine
and the third setting portion sets the first display screen as a fixed operating screen.

11. A multilayer display device which has a plurality of display screens arranged in layers and which, by displaying images on the display screens respectively, displays, frontward in a layered direction, an image produced by those images being blended together, the multilayer display device comprising:
a screen setting portion which, in response to a user selecting one of the display screens, sets the selected display screen as a operation screen;
a touch panel which is arranged frontward of the display screens so as to overlap all of the display screens in the layered direction and which accepts a touch operation by the user; and
an operation recognition portion which recognizes the touch operation as a operation with respect to the operation screen.

12. The multilayer display device of claim 11, further comprising:
a switching permission/inhibition setting portion which permits or inhibits switching of the operation screen, wherein
when the switching is being inhibited, the operation screen is fixed to one of the display screens located most frontward.

13. The multilayer display device of claim 11 or 12, further comprising:
a backlight which is arranged rearward of the display screens, the display screens displaying the images as a result of a light transmittance through each of the display screens being adjusted; and
a transparency adjustment execution portion which increases, according to a prescribed condition, the light transmittance through any of the display screens located frontward of the operation screen.

14. The multilayer display device of claim 13, wherein
when the touch operation is made, the transparency adjustment execution portion identifies an area overlapping a predetermined range relative to a touched position, and adjusts the light transmittance in the identified area.

15. The multilayer display device of claim 13 or 14, wherein
the transparency adjustment execution portion adjusts the light transmittance to a value conforming to specification by the user.

16. The multilayer display device of any of claims 11 to 15 , wherein
the screen setting portion is switchably set in at least a direct selection mode or a sequential switching mode and
when the screen setting portion is set in the direct selection mode, the screen setting portion allows the user to select any of the display screens and sets a directly selected one of the display screens as the operation screen, and
when the screen setting portion is set in the sequential switching mode, in response to the user making a touch operation meeting a predetermined condition, the screen setting portion newly sets the display screen located one screen rearward of the current operation screen as the operation screen.

17. The multilayer display device of any of claims 11 to 16, wherein
when one of the display screens other than the display screen located most frontward is set as the operation screen, if no touch operation is made for a prescribed period of time or longer, the one of the display screens located most frontward is newly set as the operation screen.

18. The multilayer display device of any of claims 11 to 16, wherein
when one of the display screens other than the display screen located most frontward is set as the operation screen, when a prescribed operation is made, the one of the display screens located most frontward is newly set as the operation screen.
